# EUROPÄISCHE PATENTSCHRIFT

(11) **EP 3 959 123 B1**
(45) Veröffentlichungstag und Bekanntmachung des Hinweises auf die Patenterteilung: **11.06.2025**
(21) Anmeldenummer: 20721206.9
(22) Anmeldetag: 23.04.2020
(51) Int. Cl.: B63J 3/04, E02B 3/20, H02G 11/00

(54) **EINRICHTUNG ZUR VERSORGUNG EINES VERBRAUCHERS**
DEVICE FOR SUPPLYING A LOAD
DISPOSITIF D'ALIMENTATION D'UN CONSOMMATEUR

(30) Priorität: 26.04.2019 DE 202019102347 U
(43) Veröffentlichungstag der Anmeldung: 02.03.2022
(73) Patentinhaber: Igus GmbH, 51147 Köln (DE)
(72) Erfinder: MCCASKILL, Sean, Charlotte, North Carolina 28226 (US); DUFF, Robb, 53809 Ruppichteroth (DE); TILING, Martin, 50823 Köln (DE)
(74) Vertreter: Lippert Stachow Patentanwälte Rechtsanwälte
(86) Internationale Anmeldenummer: PCT/EP2020/061272
(87) Internationale Veröffentlichungsnummer: WO 2020/216818

(56) Entgegenhaltungen:
- WO-A1-2011/104422
- WO-A1-2015/104080
- WO-A1-2017/129572
- DE-A1- 102009 006 982
- US-A- 5 306 999
- US-A- 5 385 480

## Beschreibung

Die Erfindung betrifft eine Einrichtung zur Versorgung eines Verbrauchers, nämlich eines Schiffs, dessen Position zunächst nicht genau bestimmbar, aber später im Wesentlichen stationär an einem Hafenkai festlegbar ist, mit Energie von einem ortsfesten Versorger, mit einem verfahrbaren Wagen oder Schlitten, der mit einem zwischen einer ersten Position und einer zweiten Position beweglichen Arm verbunden ist, der mindestens ein Steckerteil zur Verbindung mit einer Energieversorgungsleitung des Schiffs aufweist, wobei das Steckerteil über eine Energieversorgungsleitung mit dem Versorger verbunden ist.

Eine derartige Einrichtung ist aus der WO 2012/116919 A1 bekannt. Bei dieser Einrichtung handelt es sich um eine Energieversorgungseinrichtung für ein an einem Schiffsanlegeplatz eines Hafens liegendes Schiff. Die Führungseinrichtung weist einen an Land angeordneten horizontal verfahrbaren Schlitten auf, an den eine mit einem Steckerteil versehene Energieversorgungsleitung zur Versorgung des Schiffes mit elektrischer Energie angeordnet ist. Dabei ist die Energieversorgungsleitung elektrisch mit einem landseitigen Energieversorgungsnetz verbindbar. An dem Schlitten ist ein steckerseitiger Abschnitt der Energieversorgungsleitung über einen Arm vertikal verschiebbar angeordnet.

Mit dem horizontal verfahrbaren Wagen oder Schlitten kann der mit den Steckerteil versehene Abschnitt der Energieversorgungsleitung z.B. entlang des Schiffsanlegeplatzes und auch entlang eines an dem Schiffsanlegeplatz liegenden Schiffes variabel angeordnet werden. Dadurch kann der mit dem Steckerteil versehene Abschnitt der Energieversorgungsleitung zu der Stelle des Schiffsanlegeplatzes verfahren werden, an der er für das jeweils dort liegende Schiff benötigt wird. Dies ist insbesondere deshalb vorteilhaft, weil an einem Schiffsanlegeplatz eines Hafens die unterschiedlichsten Schiffe anlegen können, die sich z.B. durch ihre Größe und Bauart unterscheiden. Bei jedem dieser Schiffe kann die mit dem Steckerteil versehene, vom Verbraucher her führende Energieversorgungsleitung an einer anderen Stelle entlang des Schiffsanlegeplatzes benötigt werden. Durch den auf einer geeigneten Führungseinrichtung, die auch den versorgerseitigen Abschnitt der Energieversorgungsleitung aufnehmen kann, verfahrbaren Schlitten wird vermieden, dass der versorgerseitige Abschnitt der Energieversorgungsleitung über weite Strecken lose und ungeschützt auf oder an dem Schiffsanlegeplatz liegt.

Die Verbindung des an die Energieversorgungsleitung des Versorgers angeschlossenen Steckerteils mit der Energieversorgungsleitung des Verbrauchers birgt aufgrund der bei Schiffen angelegten hohen Spannung die Gefahr einer Lichtbogenzündung und einer dadurch bewirkten Explosion, durch die heiße Gase in einen von Personen genutzten und/oder entzündliche Gegenstände enthaltenden Raum ausströmen können. Insbesondere kann eine solche Lichtbogenexplosion sich auf einer Kaianlage eines Schiffsanlegeplatzes aufhaltende Personen und entzündliche Gegenstände, wie Fahrzeuge, gefährden.

Aus der DE 10 2009 006 982 A1 ist ein Ladesystem zum Laden einer Energiequelle eines Transportmittels bekannt, die das Transportmittel bei einer Ausführungsform von einer ortsfesten Ladevorrichtung oder in einer anderen Ausführungsform von einer beweglichen Ladevorrichtung mit Energie versorgt.

Die Ladevorrichtung weist eine Robotereinheit mit einem Roboterarm zum automatischen Anschließen der Ladevorrichtung an eine Schnittstelle der verbraucherseitigen Energiequelle auf. Die Schnittstelle kann als Steckkontakt ausgebildet sein. Der Steckkontakt kann durch eine Schutzvorrichtung vor Verschmutzung geschützt sein. Die insbesondere als zur Seite schiebbare Schutzklappe ausgeführte Schutzvorrichtung kann vor einem Ladevorgang durch die Robotereinheit entfernt, insbesondere zur Seite geschoben, werden.

Aus der WO 2015/104080 A1 ist eine elektrische Ladevorrichtung zum Laden einer Batterie eines Fahrzeugs von einem ortsfesten Versorger bekannt, mit einer Hebeeinrichtung, mit welcher ein mehrere elektrische Kontakte aufweisender Ladekopf gekoppelt ist. Die Hebeeinrichtung weist einen Gleiter mit einem Innengewinde auf, der mit einer von einem Aktor angetriebenen Führung mit Außengewinde zusammenwirkt und längs der Führung bewegbar ist. Der Gleiter ist mit einem zwischen einer ersten Position und einer zweiten Position beweglichen Arm verbunden, der an seinem freien Ende den Ladekopf trägt. Die Kontakte des Ladekopfs können durch eine Abdeckung geschützt sein, die mit Federn an dem Ladekopf aufgehängt ist, wobei beim Anpressen des Ladekopfs gegen eine Führungseinrichtung der elektrischen Anschlussvorrichtung des Fahrzeugs die Abdeckung automatisch zurückgeschoben wird, um die elektrischen Kontakte freizugeben.

Aus der US 5 306 999 A ist ebenfalls eine elektrische Ladestation für ein Elektrofahrzeug bekannt, die einen beweglichen Arm mit einem an seinem freien Ende angeordneten elektrischen Verbinder mit Kontakten zum Anschluss an korrespondierende Kontakte des Elektrofahrzeugs aufweist. Der Verbinder ist über eine im Arm geführte Energieversorgungsleitung mit der Ladestation verbunden. Der Arm kann zwischen der Ladestation und einer Position, in der die Kontakte des Verbinders mit den korrespondierenden Kontakten des Fahrzeugs verbunden sind, bewegt werden.

Aus der US 5 385 480 A ist eine Einrichtung zur Versorgung eines Elektrofahrzeugs mit elektrischer Energie bekannt mit einem an eine bewegliche Energieversorgungsleitung eines Versorgers angeschlossenen Steckerteil, das elektrische Kontakte zur Verbindung mit korrespondierenden elektrischen Kontakten in einer Aufnahme des Fahrzeugs aufweist. Das Steckerteil ist dazu ausgelegt, manuell mit Hilfe eines Griffs in die Aufnahme eingeführt zu werden. Das Steckerteil und die fahrzeugseitige Aufnahme weisen jeweils ein Abdeckteil zum Schutz der elektrischen Kontakte auf. Die Abdeckteile legen die Kontakte des Steckerteils und der Aufnahme erst dann frei, wenn das Steckerteil vollständig in die Aufnahme eingeführt und die Kontakte miteinander verbunden werden.

Aus der WO 2011/104422 A1 ist eine Ladeanordnung für ein Elektrofahrzeug bekannt, bei der die zum Laden verwendete, fahrzeugseitige Steckdose auf einem beweglichen Untergestell untergebracht ist, das zwischen einer ausgefahrenen Position und einer inneren Position beweglich ist. Eine Schutzabdeckung ist so mechanisch mit dem Untergestell gekoppelt dass, wenn sich das Untergestell in der inneren Position befindet, eine Schutzabdeckung die Steckdose und einen damit verbundenen Stecker verdeckt. Diese Gestaltung ist für Elektrofahrzeuge bestimmt und nicht ohne weiteres für die elektrische Versorgung von Schiffen geeignet. Sie kann insbesondere nicht hinreichend gegen eine mögliche Lichtbogenzündung zwischen Steckerteil der versorgerseitigen Energieversorgungsleitung und der damit verbundenen verbraucherseitigen Energieversorgungsleitung schützen.

Aus der WO 2017/129572 A1 ist eine Einrichtung zum Andocken eines Wasserfahrzeugs an eine Pier bekannt, wobei die Einrichtung ein an eine versorgerseitige Energieversorgungsleitung angeschlossenes Steckerteil zur Verbindung mit einem verbraucherseitigen Anschluss des Wasserfahrzeugs aufweist.Der vorliegenden Erfindung liegt die Aufgabe zugrunde, eine Einrichtung zur Versorgung eines Schiffes bereitzustellen, die einen für Personen und entzündliche Gegenstände gefährdeten Raum vor den Auswirkungen einer möglichen Lichtbogenzündung zwischen dem Steckerteil der versorgerseitigen Energieversorgungsleitung und der mit dem Steckerteil verbundenen verbraucherseitigen Energieversorgungsleitung weitgehend schützt und zugleich die Handhabung für Bedienpersonen erheblich erleichtert.

Erfindungsgemäß wird diese Aufgabe gemäß Anspruch 1 dadurch gelöst, dass an dem mit dem verfahrbaren Wagen oder Schlitten verbundenen, bewegbaren Arm im Bereich des freien Endes des Arms ein Gehäuse angeordnet ist, in das die versorgerseitige Energieversorgungsleitung hineingeführt und zu dem Steckerteil geführt ist, welches als an dem Gehäuse vorstehendes Steckerteil ausgeführt ist und dass ein Abdeckteil, welches als Klappe ausgebildet ist, am Gehäuse verschwenkbar gelagert ist, und das mit der Bewegung des Arms bewegbare Abdeckteil so angeordnet ist, das es in der ersten Position des Arms das Steckerteil zumindest teilweise abdeckt und in der zweiten Position des Arms das Steckerteil zur Verbindung mit der verbraucherseitigen Energieversorgungsleitung freilegt.

Durch das Abdeckteil, das in der ersten Position des Arms das Steckerteil sowohl ohne dessen Verbindung mit der verbraucherseitigen Energieversorgungsleitung als auch bei Verbindung mit der verbraucherseitigen Energieversorgungsleitung in gleicher Weise abdeckt, kann ein gefährdeter Raumbereich, z. B. auf einer Kaianlage eines Schiffsanlegeplatzes, gegen eine mögliche Lichtbogenzündung zwischen dem Steckerteil und der verbraucherseitigen Energieversorgungsleitung in der ersten Position des Arms abgeschirmt werden.

In der ersten Position des Arms kann der Arm sich in einer Bereitstellungsposition befinden, in der das Steckerteil nicht mit einer verbraucherseitigen Energieversorgungsleitung verbunden ist. Der Wagen oder Schlitten kann mit dieser Position des Arms an die Stelle verfahren werden, an der sich der Verbraucher befindet und die verbraucherseitige Energieversorgungsleitung der Einrichtung zur Versorgung des Verbrauchers zugeführt werden kann. Aus dieser ersten Position kann der mit dem Wagen oder Schlitten verbundene Arm in seine zweite Position bewegt werden, in der das Abdeckteil das Steckerteil freilegt, woraufhin die verbraucherseitige Energieversorgungsleitung mit dem Steckerteil verbunden werden kann. Nach Verbindung der verbraucherseitigen Energieversorgungsleitung mit dem Steckerteil kann der Arm mit der verbraucherseitigen Energieversorgungsleitung aus seiner zweiten Position in die erste Position bewegt werden, in der das Abdeckteil das Steckerteil zumindest teilweise abdeckt. In dieser befindet sich der Arm dann in seiner Betriebsposition, in der der Verbraucher vom ortsfesten Versorger mit Energie versorgt werden kann.

Das Abdeckteil kann am Arm in dessen erster Position so angeordnet sein, dass es das Steckerteil in der vom Verbraucher weg weisenden Richtung und bevorzugt auch in den beiden Richtungen des Verfahrweges des Wagens oder Schlittens abdeckt.

In seiner zweiten Position ist der Arm vorzugsweise so angeordnet, dass das Steckerteil für eine sich auf einer ortsfesten Basisfläche, relativ zu der der Wagen oder Schlitten verfahrbar ist, befindliche Bedienperson leicht zugänglich ist, sodass sie insbesondere eine ein größeres Gewicht und eine größere Dicke aufweisende verbraucherseitige Energieversorgungsleitung auf einfache Weise mit dem Steckerteil verbinden kann.

Das Abdeckteil kann eine vom Verbraucher weg gerichtete Wand aufweisen, mit der es das Steckerteil in der ersten Position des Arms abdeckt. Weiterhin kann das Abdeckteil an seine vom Verbraucher weg weisende Wand anschließende, in Richtung des Verfahrweges des Wagens oder Schlittens weisende Seitenwände aufweisen, die zusammen mit der vom Verbraucher weg weisenden Wand das Steckerteil in der ersten Position des Arms abdecken.

Das Abdeckteil kann in der ersten Position des Arms an diesem verriegelbar sein.

Die Bewegung des Abdeckteils kann an die Bewegung des Arms zwischen seiner ersten und zweiten Position gekoppelt sein, insbesondere durch eine mechanische Kopplung zwischen dem Abdeckteil und dem Arm.

In einer bevorzugten Ausführung der Erfindung ist der Arm zwischen seiner ersten Position und seiner zweiten Position verschwenkbar, wobei die Schwenkachse horizontal und parallel zum Verfahrweg des Wagens oder Schlittens angeordnet sein kann.

Der Wagen oder Schlitten kann in einem Schacht in der ortsfesten Basisfläche, z.B. eines Kais, angeordnet sein, sodass der mit dem Wagen oder Schlitten verbundene Arm in seiner zweiten Position zwecks einfacher Erreichbarkeit des Steckerteils durch eine Bedienperson im Wesentlichen horizontal, zumindest aber in einem Winkel von kleiner als 30°, insbesondere kleiner als 20°, gegenüber der Horizontalen angeordnet sein kann.

Handelt es sich um eine Energieversorgungseinrichtung für ein an einem Schiffsanlegeplatz eines Hafens liegendes Schiff, ist der Wagen oder Schlitten vorzugsweise in einer schiffsseitig an der Kaimauer angebrachten Führungseinrichtung angeordnet, sodass der mit dem Wagen oder Schlitten verbundene Arm in seiner zweiten Position ebenfalls im Wesentlichen horizontal, zumindest aber in einem Winkel von kleiner als 30°, insbesondere kleiner als 20°, gegenüber der Horizontalen in einem für eine Bedienperson gut erreichbare Höhe über dem Kai angeordnet sein kann.

In seiner ersten Position kann der Arm aus seiner zweiten Position so aufgeschwenkt sein, dass das Steckerteil höher angeordnet ist als in der zweiten Position des Arms. Der Arm kann in seiner ersten Position in einem Winkel größer als 60°, insbesondere größer als 70°, gegenüber der Horizontalen angeordnet sein. In dieser Position nimmt der Wagen oder Schlitten zusammen mit dem Arm einen relativ kleinen sich horizontal und senkrecht zum Verfahrweg des Wagens oder Schlittens erstreckenden Raum ein. Auf der ortsfesten Basisfläche, z.B. einer Kaianlage, nimmt daher der Wagen oder Schlitten zusammen mit dem Arm in seiner ersten Position einen relativ geringen, die Bewegungsfreiheit dort befindlicher Personen und Fahrzeuge kaum einschränkenden Raum ein.

In einer bevorzugten Ausführung der Erfindung kann das Abdeckteil als eine Klappe ausgebildet sein, die am Arm um eine zur Verschwenkachse des Arms parallele Achse verschwenkbar ist, wobei die Achse mit einem Abstand vom Steckerteil in Richtung auf das freie Ende des Arms hin angeordnet ist.

In einer bevorzugt etwa vertikalen Stellung des Arms in seiner ersten Position kann sich die Klappe ebenfalls in vertikaler Schwenkposition befinden. Die vom Verbraucher weg weisende Wand und die in Richtung des Verfahrweges des Wagens oder Schlittens weisenden Seitenwände der Klappe können dann ebenfalls vertikal verlaufen.

Durch Kopplung der Schwenkbewegung der Klappe mit der Schwenkbewegung des Arms kann die Klappe beim Verschwenken des Arms aus seiner ersten Position in die zweite Position vom Arm weg geschwenkt werden, sodass das Steckerteil in der zweiten Position des Arms freigelegt ist. Die Klappe kann sich in der zweiten Position des Arms ebenfalls in vertikaler Stellung befinden.

Der Arm und die Klappe können so ausgebildet sein, dass sich die Klappe in der zweiten Position des Arms, in der sie vom Arm weg geschwenkt ist, auf einer ortsfesten Basisfläche, z.B. der Kaianlage eines Schiffsanlegeplatzes, abstützt.

Die Klappe kann eine vorzugsweise im Wesentlichen rechteckige vom Verbraucher weg weisende Wand und daran seitlich anschließende, in Richtung des Verfahrweges des Wagens oder Schlittens weisende, vorzugsweise im Wesentlichen rechteckige Seitenwände aufweisen. Die Klappe kann dann einen gefährdeten Raumbereich vom Verbraucher weg und seitlich vor den Auswirkungen einer Lichtbogenexplosion im Verbindungsbereich zwischen dem Steckerteil und der verbraucherseitigen Energieversorgungsleitung schützen. Bei Verwendung der erfindungsgemäßen Einrichtung zur Energieversorgung für ein an einer Kaianlage eines Hafens liegende Schiff besteht bei dieser Ausbildung der Klappe ein Schutz senkrecht zum Verfahrweg des Wagens oder Schlittens zur Kaianlage hin und in den beiden Richtungen des Verfahrweges.

Die vom Verbraucher weg weisende Wand und gegebenenfalls die Seitenwände der Klappe können in der zweiten Position des Arms im Wesentlichen senkrecht zum Arm angeordnet sein.

Die Klappe kann durch einen Hebelmechanismus mit dem Arm gekoppelt sein, derart, dass sie durch die Schwenkbewegung des Arms zwischen dessen erster und zweiter Position simultan mitverschwenkt wird.

Dazu kann der Hebelmechanismus eine Gelenkstange aufweisen, die in einem ihrer Endbereiche verschwenkbar an der Klappe und in ihrem anderen Endbereich verschwenkbar an einem ortsfest mit dem Wagen oder Schlitten verbundenen, vom Verbraucher weg weisenden Hebelarm angeordnet ist.

Am oder im Arm kann ein sich längs des Arms erstreckender Kabelkanal angeordnet sein, in dem die mindestens eine Energieversorgungsleitung im Bereich des Arms angeordnet ist.

Der Arm kann plattenförmig ausgebildet sein, wobei der Kabelkanal auf dem Arm angeordnet ist.

Insbesondere kann jeweils ein Kabelkanal im Bereich einer der beiden Längsseiten des Arms angeordnet sein.

Der Kabelkanal kann zumindest im Bereich der Schwenkverbindung des Arms mit dem Wagen oder Schlitten in Verschwenkrichtung biegeflexibel ausgebildet sein.

Im Bereich des freien Endes des Arms ist ein Gehäuse angeordnet, in das die versorgerseitige Energieversorgungsleitung hineingeführt und zu einem an dem Gehäuse in Richtung zum Verbraucher hin vorstehenden Steckerteil geführt ist. Der Kabelkanal kann an dem Gehäuse enden.

Das Abdeckteil kann in der ersten Position des Arms mit dem Gehäuse an der vom Verbraucher weg gerichteten Seite, den in Richtung des Verfahrweges des Wagens oder Schlittens weisenden Seiten und der vom Wagen oder Schlitten weg weisenden Seite mit dem Gehäuse abschließen. Somit bildet das Abdeckteil mit dem Gehäuse in der ersten Position des Arms eine weitgehend geschlossene Abdeckung des Steckerteils in der vom Verbraucher weg weisenden Richtung sowie in seitlicher Richtung des Verfahrweges des Wagens oder Schlittens und in der vom Wagen oder Schlitten weg weisenden Richtung des Arms. Durch eine Lichtbogenzündung entstehende heiße Gase können somit in einen ungefährdeten Raum abgeleitet werden.

Das als Klappe ausgebildete Abdeckteil ist am Gehäuse verschwenkbar gelagert.

Die versorgerseitige Energieversorgungsleitung kann in einem Bereich zwischen dem ortsfesten Versorger und dem Wagen oder Schlitten in mindestens einer Energieführungskette verlegt sein, die einen ortsfest zum Versorger angeordneten ersten Anschluss und einen am Wagen oder Schlitten angeordneten zweiten Anschluss aufweist, von dem aus die Energieversorgungsleitung über mindestens einen Kabelkanal zum verschwenkbaren Arm hin geführt ist.

Die Energieführungskette kann ein mit dem ersten Anschluss verbundenes erstes Trum und ein mit dem zweiten Anschluss verbundenes zweites Trum aufweisen, die über einen Umlenkbereich miteinander verbunden sind. Die beiden Trume können übereinander angeordnet sein, wobei das untere Trum bevorzugt mit dem ersten Anschluss und das obere Trum bevorzugt mit dem zweiten Anschluss verbunden ist.

Die Energieführungskette kann in einer insbesondere rinnenförmigen Führungseinrichtung angeordnet sein. Die Führungseinrichtung mit der Energieführungskette kann bei Verwendung der erfindungsgemäßen Einrichtung für ein an einer Kaianlage eines Hafens liegendes Schiff an der zum Schiff weisenden Seite der Kaimauer angeordnet sein.

Alternativ kann die Führungseinrichtung mit der Energieführungskette auch in einem in einer ortsfesten Basis, relativ zu der der Wagen oder Schlitten verfahrbar ist, z.B. einer Kaianlage eines Hafens, vorgesehenen Schacht angeordnet sein. Die Führungseinrichtung kann auch auf der ortsfesten Basis, z.B. einer Kaianlage eines Hafens, angeordnet sein.

Ein Ausführungsbeispiel der vorliegenden Erfindung wird im Folgenden anhand der Zeichnung näher beschrieben. In der Zeichnung zeigen:
- Fig. 1:: eine stirnseitige Draufsicht auf eine Einrichtung zur Versorgung eines Verbrauchers, wobei sich der mit dem Wagen oder Schlitten verbundene Arm mit dem Steckerteil in seiner zweiten Position befindet, mit gestrichelt gezeichneter erster Position und einer Zwischenposition,
- Fig. 2:: eine perspektivische Draufsicht auf die Einrichtung zur Versorgung eines Verbrauchers gemäß Fig. 1, wobei sich der mit dem Wagen oder Schlitten verbundene Arm in seiner zweiten Position befindet, und
- Fig. 3:: eine perspektivische Draufsicht auf die Einrichtung zur Versorgung eines Verbrauchers gemäß Fig. 1, wobei sich der mit dem Wagen oder Schlitten verbundene Arm in seiner ersten Position befindet.

Wie aus der Zeichnung hervorgeht, umfasst die Einrichtung 1 zur Versorgung eines (in der Zeichnung nicht dargestellten) Verbrauchers, dessen Position zunächst nicht genau bestimmbar, aber später im Wesentlichen stationär festlegbar ist, einen verfahrbaren Wagen oder Schlitten 2, der mit einem verschwenkbaren Arm 3 verbunden ist. Der Arm weist mindestens ein Steckerteil 4 zur Verbindung mit einer Energieversorgungsleitung 5 des Verbrauchers auf, wobei das Steckerteil 4 über eine Energieversorgungsleitung 6 mit dem (in der Zeichnung nicht dargestellten) ortsfesten Versorger verbunden ist.

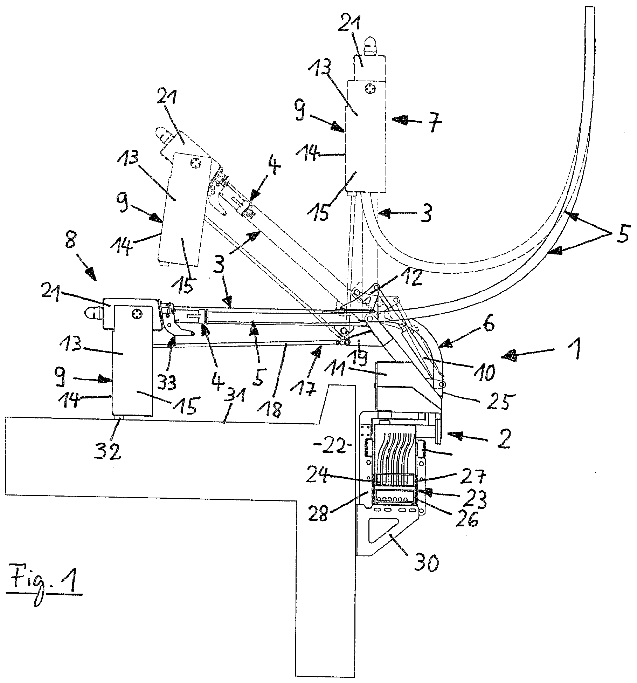

Wie insbesondere aus Fig. 1 hervorgeht, ist der mit dem Wagen oder Schlitten 2 verbundene Arm 3 zwischen einer ersten Position 7 und einer zweiten Position 8 verschwenkbar. Am Arm 3 ist im Bereich seines freien Endes ein mit der Schwenkbewegung des Arms 3 verschwenkbares Abdeckteil 9 angeordnet, dessen Schwenkbewegung mit der Schwenkbewegung des Arms 3 gekoppelt ist, und zwar derart, dass das Abdeckteil 9 in der ersten Position 7 des Arms 3 das Steckerteil 4 zumindest teilweise abdeckt und in der zweiten Position 8 des Arms 3 das Steckerteil 4 zur Verbindung mit der verbraucherseitigen Energieversorgungsleitung 5 freigelegt.

Der Wagen oder Schlitten 2 ist senkrecht zur Zeichnungsebene der Fig. 1 in beiden Richtungen verfahrbar. Die Achse, um die der mit dem Wagen oder Schlitten 2 verbundene Arm 3 verschwenkbar ist, ist parallel zum Verfahrweg des Wagens oder Schlittens 2 angeordnet. Wie ebenfalls aus der Zeichnung hervorgeht, ist der Arm 3 in seiner ersten Position 7 im Wesentlichen vertikal und in seiner zweiten Position 8 im Wesentlichen horizontal angeordnet.

Bei der in Fig. 1 dargestellten Zwischenposition des verschwenkbaren Arms 3 ist die verbraucherseitige Energieversorgungsleitung 5 der Übersichtlichkeit der Zeichnung halber nicht eingezeichnet.

Der Arm 3 ist in dem betrachteten Ausführungsbeispiel über einen Hydraulikantrieb 10 verschwenkbar, der an einer haubenförmigen Abdeckung 11 des Wagens oder Schlittens 2 und an einem auf dem Arm 3 an seinem dem freien Ende gegenüberliegenden Endbereich angeordneten gabelförmigen Steg 12 gelenkig angreift.

Das Abdeckteil 9 ist als eine Klappe 13 ausgebildet, die am Arm 3 um eine zur Verschwenkachse des Arms 3 parallele Achse verschwenkbar ist, wobei die Achse mit einem Abstand vom Steckerteil 4 in Richtung auf das freie Ende des Arms 3 hin angeordnet ist. Wie aus der Zeichnung hervorgeht, weist die Klappe 13 eine im Wesentlichen rechteckige, vom Verbraucher wegweisende Wand 14 und daran seitlich anschließende, in Richtung des Verfahrweges des Wagens oder Schlittens 2 weisende, im Wesentlichen rechteckige Seitenwände 15, 16 auf. Die Klappe kann somit einen gefährdeten Raumbereich, bei dem es sich gemäß Zeichnung um eine Kaianlage für ein daran anzulegendes Schiff (Verbraucher) handelt, vom Verbraucher weg und seitlich vor den Auswirkungen einer möglichen Lichtbogenexplosion im Verbindungsbereich zwischen dem Steckerteil 4 und der verbraucherseitigen Energieversorgungsleitung 5 schützen.

In der vertikalen Stellung des Arms 3 in seiner ersten Position 7 befindet sich die Klappe 13 ebenfalls in ihrer vertikalen Schwenkposition, wobei die vom Verbraucher wegweisende Wand 14 und die in Richtung des Verfahrweges des Wagens oder Schlittens 2 weisenden Seitenflächen 15, 16 der Klappe 13 ebenfalls vertikal verlaufen. Die Klappe 13 ist, wie insbesondere aus Fig. 1 hervorgeht, durch einen Hebelmechanismus 17 mit dem Arm 3 derart gekoppelt, dass sie durch die Schwenkbewegung des Arms 3 zwischen dessen erster Position 7 und zweiter Position 8 simultan mit verschwenkt wird. Der Hebelmechanismus 17 weist eine Gelenkstange 18 auf, die in einem ihrer Endbereiche verschwenkbar an der Klappe 13 und in ihrem anderen Endbereich verschwenkbar an einem ortsfest mit dem Wagen oder Schlitten 2 verbundenen, vom Verbraucher wegweisenden Hebelarm 19 angeordnet ist.

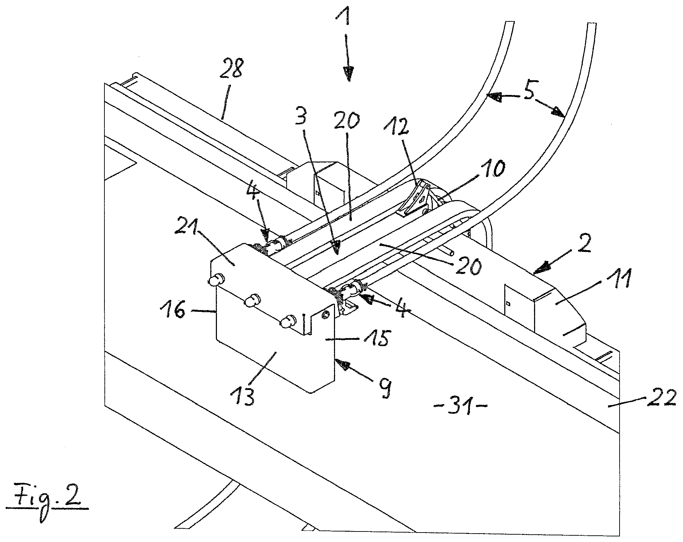

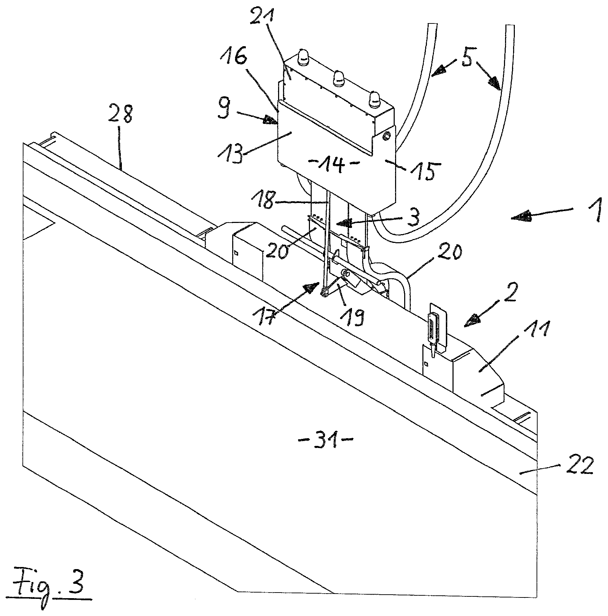

Wie insbesondere die Figuren 2 und 3 zeigen, ist der Arm 3 plattenförmig ausgebildet, wobei sich jeweils ein Kabelkanal 20 im Bereich einer der beiden Längsseiten des plattenförmigen Arms 3 befindet, in dem jeweils ein armseitiger Bereich der Energieversorgungsleitung 6 angeordnet ist.

Die beiden Kabelkanäle 20 sind, wie insbesondere aus den Figuren 2 und 3 hervorgeht, in Verschwenkrichtung des Arms 3 biegeflexibel ausgebildet.

Im Bereich des freien Endes des Arms 3 ist ein Gehäuse 21 angeordnet, in das die Kabelkanäle 20 enden und der darin angeordnete Bereich der Energieversorgungsleitung 6 zu dem an dem Gehäuse 21 in Richtung zum Verbraucher hin vorstehenden Steckerteil 4 geführt sind.

Die Klappe 13 ist am Gehäuse 21 verschwenkbar gelagert. Wie in Fig. 3 gezeigt ist, schließt die Klappe 13 in der ersten Position 7 des Arms 3 mit dem Gehäuse 21 an der vom Verbraucher weg gerichteten Seite, den in Richtung des Verfahrweges des Wagens oder Schlittens 2 weisenden Seiten und der vom Wagen oder Schlitten 2 wegweisenden Seite mit dem Gehäuse 21 ab, ohne dass nennenswerte Zwischenräume zwischen der Klappe 13 und dem Gehäuse 21 an diesen Seiten entstehen, durch die bei einer möglichen Lichtbogenzündung entstehende heiße Gase in den genannten Richtungen austreten können. Derartige durch eine Lichtbogenzündung entstehende heiße Gase können somit in einen ungefährdeten Raum, im vorliegenden Beispiel zwischen der Kaimauer 22 und dem (in der Zeichnung nicht dargestellten) Schiff, abgeleitet werden. Zu bemerken ist, dass in diesem Beispiel das Schiff über (in der Zeichnung nicht dargestellte) Folder von der Kaimauer 22 so weit beabstandet ist, dass der Wagen oder Schlitten 2 und dessen Führungseinrichtung durch das Schiff nicht berührt werden.

Die versorgerseitige Energieversorgungsleitung 6 ist im Bereich zwischen dem ortsfesten Versorger und dem Wagen oder Schlitten 2 in einer Energieführungskette 23 verlegt, die einen ortsfest zum Versorger angeordneten (in der Zeichnung nicht dargestellten) ersten Anschluss und einen am Wagen oder Schlitten 2 angeordneten zweiten Anschluss 24 aufweist, von dem aus die Energieversorgungsleitung 6 über mindestens einen Kabelkanal 25 zum verschwenkbaren Arm 3 hin geführt ist. Die Energieführungskette 23 weist ein mit dem ersten Anschluss verbundenes unteres Trum 26 und ein mit dem zweiten Anschluss 24 verbundenes oberes Trum 27 auf, die über einen Umlenkbereich miteinander verbunden sind. Die Energieführungskette 23 ist in einer Führungsrinne 28 angeordnet, die ebenfalls den mit dem zweiten Anschluss 24 verbundenen Wagen oder Schlitten 2 längs seines Verfahrweges auf Rollen 29 führt. Die Führungsrinne ist auf Konsolen 30 an der Kaimauer 22 ortsfest angeordnet.

Aufgrund der seitlich an der Kaimauer 22 befestigten Führungsrinne 28 mit dem darauf angeordneten Wagen oder Schlitten 2 ist die Schwenkachse des Arms 3 relativ niedrig in Bezug auf die Basisfläche 31 des Kais angeordnet, sodass der Arm 3 in seiner zweiten, im Wesentlichen horizontalen Position mit dem Steckerteil 4 für eine auf dem Kai befindliche Bedienperson leicht zugänglich ist. In der zweiten Position 8 des Arms 3 stützt sich die Klappe 13 mit einem oder mehreren Auflageelementen 32 auf der Basisfläche 31 des Kais ab. Das Steckerteil 4 kann von der Bedienperson mit der verbraucherseitigen Energieversorgungsleitung 5 verbunden und die Verbindung durch einen Verriegelungsmechanismus 33 verriegelt werden. Ebenfalls kann nach Beendigung der Energieversorgung des Verbrauchers in der zweiten Position 8 des Arms 3 durch Lösen der Verriegelung die verbraucherseitige Energieversorgungsleitung 5 vom Steckerteil 4 gelöst werden.

Weiterhin ist am Arm 3 und der Klappe 13 eine (in der Zeichnung nicht dargestellte) Verriegelungseinrichtung vorgesehen, mit der die Klappe 13 in der ersten Position 7 des Arms 3 mit dem Arm 3 verriegelt werden kann, sodass im Falle einer Lichtbogenexplosion zwischen dem Steckerteil 4 und der mit dem Steckerteil 4 verbundenen verbraucherseitigen Energieversorgungsleitung 5 die Klappe 13 durch den Explosionsdruck nicht aufgeschwenkt werden kann.

### Bezugszeichenliste

- 1: Einrichtung
- 2: Schlitten
- 3: Arm
- 4: Steckerteil
- 5: Energieversorgungsleitung
- 6: Energieversorgungsleitung
- 7: erste Position
- 8: zweite Position
- 9: Abdeckteil
- 10: Hydraulikantrieg
- 11: Abdeckung
- 12: Steg
- 13: Klappe
- 14: Wand
- 15: Seitenfläche
- 16: Seitenfläche
- 17: Hebelmechanismus
- 18: Gelenkstange
- 19: Hebelarm
- 20: Kabelkanal
- 21: Gehäuse
- 22: Kaimauer
- 23: Energieführungskette
- 24: zweiter Anschluss
- 25: Kabelkanal
- 26: unteres Trum
- 27: oberes Trum
- 28: Führungsrinne
- 29: Rolle
- 30: Konsole
- 31: Basisfläche
- 32: Auflageelement
- 33: Verriegelungsmechanismus

## Patentansprüche

1. Einrichtung (1) zur Versorgung eines Verbrauchers, nämlich eines Schiffes dessen Position zunächst nicht genau bestimmbar, aber später im Wesentlichen stationär an einem Hafenkai festlegbar ist, mit elektrischer Energie von einem ortsfesten Versorger, mit einem verfahrbaren Wagen oder Schlitten (2), der mit einem zwischen einer ersten Position (7) und einer zweiten Position (8) beweglichen Arm (3) verbunden ist, der mindestens ein Steckerteil (4) zur Verbindung mit einer Energieversorgungsleitung (5) des Schiffes aufweist, wobei das Steckerteil (4) über eine Energieversorgungsleitung (6) mit dem Versorger verbunden ist, **dadurch gekenn** - **zeichnet**, dass am Arm (3) im Bereich des freien Endes des Arms (3) ein Gehäuse (21) angeordnet ist, in das die versorgerseitige Energieversorgungsleitung (6) hineingeführt und zu dem Steckerteil (4) geführt ist, welches als an dem Gehäuse (21) vorstehendes Steckerteil (4) ausgeführt ist und
dass ein Abdeckteil (9), welches als Klappe (13) ausgebildet ist, am Gehäuse (21) verschwenkbar gelagert ist und mit der Bewegung des Arms bewegbar angeordnet ist, und dass das Abdeckteil in der ersten Position (7) des Arms (3) das Steckerteil (4) zumindest teilweise abdeckt und in der zweiten Position (8) des Arms (3) das Steckerteil (4) zur Verbindung mit der schiffsseitigen Energieversorgungsleitung (5) freilegt.

2. Einrichtung (1) nach Anspruch 1, **dadurch gekennzeichnet, dass** der Arm (3) in seiner zweiten Position (8) so angeordnet ist, dass das Steckerteil (4) für eine sich auf einer ortsfesten Basisfläche (31), relativ zu der der Wagen oder Schlitten (2) verfahrbar ist, befindliche Bedienperson leicht zugänglich ist.

3. Einrichtung (1) nach Anspruch 1 oder 2, **dadurch gekennzeichnet, dass** das Abdeckteil (9) eine vom Schiff weg gerichtete Wand (14) und an die Wand (14) seitlich anschließende, in Richtung des Verfahrweges des Wagens oder Schlittens (2) weisende Seitenwände (15, 16) aufweist, die das Steckerteil (4) in der ersten Position (7) des Arms (3) abdecken.

4. Einrichtung (1) nach einem der Ansprüche 1 bis 3, **dadurch gekennzeichnet, dass** das Abdeckteil (9) in der ersten Position (7) des Arms (3) verriegelbar und entriegelbar ist.

5. Einrichtung (1) nach einem der Ansprüche 1 bis 4, **dadurch gekennzeichnet, dass** die Bewegung des Abdeckteils (9) an die Bewegung des Arms (3) zwischen seiner ersten Position (7) und seiner zweiten Position (8) gekoppelt ist, insbesondere durch eine mechanische Kopplung zwischen dem Abdeckteil (9) und dem Arm (3) .

6. Einrichtung (1) nach einem der Ansprüche 1 bis 5, **dadurch gekennzeichnet, dass** der Arm (3) zwischen der ersten Position (7) und der zweiten Position (8) verschwenkbar ist.

7. Einrichtung (1) nach Anspruch 6, **dadurch gekennzeichnet, dass** die Achse, um die der Arm (3) verschwenkbar ist, horizontal und parallel zum Verfahrweg des Wagens oder Schlittens (2) verläuft.

8. Einrichtung (1) nach Anspruch 6 oder 7, **dadurch gekennzeichnet, dass** der Arm (3) in seiner zweiten Position (8) im Wesentlichen horizontal, zumindest aber in einem Winkel von kleiner als 30°, insbesondere kleiner als 20°, gegenüber der Horizontalen angeordnet ist.

9. Einrichtung (1) nach einem der Ansprüche 6 bis 8, **dadurch gekennzeichnet, dass** der Arm (3) in seiner ersten Position (7) im Wesentlichen vertikal, zumindest aber in einem Winkel von größer als 60°, insbesondere größer als 70°, gegenüber der Horizontalen angeordnet ist.

10. Einrichtung (1) nach einem der Ansprüche 6 bis 9, **dadurch gekennzeichnet, dass** das Abdeckteil (9) als eine Klappe (13) ausgebildet ist, die am Arm (3) um eine zur Verschwenkachse des Arms parallele Achse verschwenkbar ist, wobei die Achse mit einem Abstand vom Steckerteil (4) in Richtung auf das freie Ende des Arms (3) in angeordnet ist.

11. Einrichtung (1) nach Anspruch 10, **dadurch gekennzeichnet, dass** in einer vertikalen Stellung des Arms (3) in seiner ersten Position (7) die Klappe (13) sich ebenfalls in vertikaler Schwenkposition befindet.

12. Einrichtung (1) nach Anspruch 10 oder 11, **dadurch gekennzeichnet, dass** die Klappe (13) in der zweiten Position (8) des Arms (3) sich in vertikaler Schwenkposition befindet.

13. Einrichtung (1) nach einem der Ansprüche 10 bis 12, **dadurch gekennzeichnet, dass** der Arm (3) und die Klappe (13) so ausgebildet sind, dass sich die Klappe (13) in der zweiten Position (8) des Arms (3) auf einer ortsfesten Basisfläche (31) abstützt.

14. Einrichtung (1) nach Anspruch 3 und einem der Ansprüche 10 bis 13, **dadurch gekennzeichnet, dass** die vom Schiff weg weisende Wand (14) und die an die Wand (14) anschließenden Seitenwände (15, 16) der Klappe (13) in der zweiten Position (8) des Arms (3) im Wesentlichen senkrecht zum Arm (3) angeordnet sind.

15. Einrichtung (1) nach einem der Ansprüche 10 bis 14, **dadurch gekennzeichnet, dass** die Klappe (13) durch einen Hebelmechanismus (17) mit dem Arm (3) gekoppelt ist, derart, dass sie durch die Schwenkbewegung des Arms (3) zwischen dessen erster Position (7) und zweiter Position (8) simultan mitverschwenkt wird.

16. Einrichtung (1) nach einem der Ansprüche 10 bis 15, **dadurch gekennzeichnet, dass** der Arm (3) plattenförmig ausgebildet ist und am Arm (3) ein sich längs des Arms (3) erstreckender Kabelkanal (20) angeordnet ist, in dem die mindestens eine versorgerseitige Energieversorgungsleitung (6) im Bereich des Arms (3) angeordnet ist, wobei der Kabelkanal (20) zumindest im Bereich der Schwenkverbindung des Arms (3) mit dem Wagen oder Schlitten (2) in Verschwenkrichtung biegeflexibel ausgebildet ist.

17. Einrichtung (1) nach Anspruch 1, **dadurch gekenn - zeichnet**, dass das Abdeckteil (9) in der ersten Position (7) des Arms (3) mit dem Gehäuse (21) an der vom Schiff weg gerichteten Seite, den in Richtung des Verfahrweges des Wagens oder Schlittens (2) weisenden Seiten und der vom Wagen oder Schlitten (2) weg weisenden Seite mit dem Gehäuse (21) abschließt.

18. Einrichtung (1) nach einem der Ansprüche 1 bis 17, **dadurch gekennzeichnet, dass** die versorgerseitige Energieversorgungsleitung (6) in einem Bereich zwischen dem ortsfesten Versorger und dem Wagen oder Schlitten (2) in mindestens einer Energieführungskette (23) verlegt ist, die einen ortsfest zum Versorger angeordneten ersten Anschluss und einen am Wagen oder Schlitten (2) angeordneten zweiten Anschluss (24) aufweist, von dem aus die Energieversorgungsleitung (6) über mindestens einen Kabelkanal (25) zum beweglichen Arm (3) hin geführt ist.

## Claims

1. A device (1) for supplying a consumer, namely a ship, the position of which initially cannot be exactly determined but which can later be substantially stationarily fixed at a quay of a ship berthing dock, with electrical power from a stationary power supply comprising a displaceable carriage or slide (2) connected to an arm (3) which is moveable between a first position (7) and a second position (8) and which has at least one plug connector part (4) for connection to a power supply line (5) of the ship, wherein the plug connector part (4) is connected to the power supply by way of a power supply line (6), **characterised in**
- **that** on the arm (3), in a region of a free end of the arm (3), a housing (21) is arranged into which the power supply-side second power supply line (6) is passed and is guided to the plug connector part (4), which is arranged to be projecting from the housing (21), and
- **that** a cover part (9), which is in the form of a flap (13), is mounted pivotably to the housing (21) and is arranged moveable with the movement of the arm and
- **that** the cover part in the first position (7) of the arm (3) at least partially covers the plug connector part (4) and in the second position (8) of the arm (3) exposes the plug connector part (4) for connection to the ship-side power supply line (5).

2. A device (1) according to claim 1 **characterised in that** in its second position (8) the arm (3) is so arranged that the plug connector part (4) is easily accessible to an operator disposed on a stationary base surface (31), relative to which the carriage or slide (2) is displaceable.

3. A device (1) according to claim 1 or claim 2 **characterised in that** the cover part (9) has a wall (14) directed away from the ship and side walls (15, 16) which laterally adjoin the wall (14) and which face in the direction of the path of travel of the carriage or slide (2) and which cover the plug connector part (4) in the first position (7) of the arm (3).

4. A device (1) according to one of claims 1 to 3 **characterised in that** the cover part (9) can be locked and unlocked in the first position (7) of the arm (3).

5. A device (1) according to one of claims 1 to 4 **characterised in that** the movement of the cover part (9) is coupled to the movement of the arm (3) between its first position (7) and its second position (8), in particular by a mechanical coupling between the cover part (9) and the arm (3).

6. A device (1) according to one of claims 1 to 5 **characterised in that** the arm (3) is pivotable between the first position (7) and the second position (8).

7. A device (1) according to claim 6 **characterised in that** the axis about which the arm (3) is pivotable extends horizontally and parallel to the path of travel of the carriage or slide (2).

8. A device (1) according to claim 6 or claim 7 **characterised in that** in its second position (8) the arm (3) is arranged substantially horizontally, but at least at an angle of less than 30°, in particular less than 20°, relative to the horizontal.

9. A device (1) according to one of claims 6 to 8 **characterised in that** in its first position the arm (3) is arranged substantially vertically, but at least at an angle of greater than 60°, in particular greater than 70°, with respect to the horizontal.

10. A device (1) according to one of claims 6 to 9 **characterised in that** the cover part (9) is in the form of a flap (13) pivotable on the arm (3) about an axis parallel to the pivot axis of the arm, wherein the axis is arranged at a spacing from the plug part (4) in a direction towards the free end of the arm (3).

11. A device (1) according to claim 10 **characterised in that** in a vertical position of the arm (3) in its first position (7) the flap (13) is also in a vertical pivotal position.

12. A device (1) according to claim 10 or claim 11 **characterised in that** in the second position (8) of the arm (3) the flap (13) is in a vertical pivotal position.

13. A device (1) according to one of claims 10 to 12 **characterised in that** the arm (3) and the flap (13) are of such a configuration that the flap (13) is supported on a stationary base surface (31) in the second position (8) of the arm (3).

14. A device (1) according to claim 3 and one of claims 10 to 13 **characterised in that** the wall (14) facing away from the ship and the side walls (15, 16) of the flap (13), that adjoin the wall (14), are arranged substantially perpendicularly to the arm (3) in the second position (8) of the arm (3).

15. A device (1) according to one of claims 10 to 14 **characterised in that** the flap (13) is coupled to the arm (3) by a lever mechanism (17) in such a way that it is simultaneously also pivoted by the pivotal movement of the arm (3) between its first position (7) and its second position (8).

16. A device (1) according to one of claims 10 to 15 **characterised in that** the arm (3) is of a plate-shaped configuration and arranged on the arm (3) is a cable passage (20) which extends along the arm (3) and in which the at least one power supply-side power supply line (6) is arranged in the region of the arm (3), wherein the cable passage (20) is of a flexurally flexible configuration in the pivotal direction at least in the region of the pivotal connection of the arm (3) to the carriage or slide (2).

17. A device (1) according to claim 1 **characterised in that** the cover part (9) in the first position (7) of the arm (3) terminates with the housing (21) at the side directed away from the ship, the sides facing in the direction of the path of travel of the carriage or slide (2) and the side facing away from the carriage or slide (2).

18. A device (1) according to one of claims 1 to 17 **characterised in that** the power supply-side power supply line (6) in a region between the stationary power supply and the carriage or slide (2) is guided in at least one energy guide chain (23) which has a first connection arranged stationarily relative to the power supply and a second connection (24) arranged at the carriage or slide (2), from which the power supply line (6) is guided by way of at least one cable passage (25) towards the moveable arm (3).

## Revendications

1. Dispositif (1) d'alimentation en énergie électrique d'un consommateur, à savoir un navire dont la position ne peut pas être déterminée avec précision dans un premier temps, mais peut être fixée ultérieurement de manière essentiellement stationnaire sur un quai portuaire, à partir d'un fournisseur fixe, comprenant un chariot mobile ou coulisseau (2) qui est relié à un bras (3) mobile entre une première position (7) et une deuxième position (8), qui présente au moins un élément enfichable (4) pour la liaison avec une ligne d'alimentation en énergie (5) du navire, ledit élément enfichable (4) étant reliée au fournisseur par une ligne d'alimentation en énergie (6), **caractérisé en ce qu'**un boîtier (21) est disposé sur le bras (3) dans la zone de l'extrémité libre du bras (3), dans lequel la ligne d'alimentation en énergie (6) côté fournisseur est introduite et est guidée vers l'élément enfichable (4), qui est réalisé sous la forme d'un élément enfichable (4) faisant saillie sur le boîtier (21) et
**en ce qu'**une pièce de recouvrement (9), qui est réalisée sous la forme d'un volet (13), est montée de manière pivotante sur le boîtier (21) et est disposée de manière à pouvoir se déplacer avec le mouvement du bras, et **en ce que** la pièce de recouvrement recouvre au moins partiellement l'élément enfichable (4) dans la première position (7) du bras (3) et dégage l'élément enfichable (4) dans la deuxième position (8) du bras (3) pour la liaison avec la conduite d'alimentation en énergie (5) côté navire.

2. Dispositif (1) selon la revendication 1, **caractérisé en ce que** le bras (3) est disposé, dans sa deuxième position (8), de telle sorte que l'élément enfichable (4) est facilement accessible à un opérateur se trouvant sur une surface de base fixe (31) par rapport à laquelle le chariot ou le coulisseau (2) est déplaçable.

3. Dispositif (1) selon la revendication 1 ou 2, **caractérisé en ce que** la pièce de recouvrement (9) présente une paroi (14) orientée à l'opposé du navire et des parois latérales (15, 16) se raccordant latéralement à la paroi (14) et orientées dans la direction de la trajectoire de déplacement du chariot ou du coulisseau (2), qui recouvrent l'élément enfichable (4) dans la première position (7) du bras (3).

4. Dispositif (1) selon l'une quelconque des revendications 1 à 3, **caractérisé en ce que** la pièce de recouvrement (9) est verrouillable et déverrouillable dans la première position (7) du bras (3).

5. Dispositif (1) selon l'une quelconque des revendications 1 à 4, **caractérisé en ce que** le mouvement de la pièce de recouvrement (9) est couplé au mouvement du bras (3) entre sa première position (7) et sa deuxième position (8), notamment par un couplage mécanique entre la pièce de recouvrement (9) et le bras (3).

6. Dispositif (1) selon l'une quelconque des revendications 1 à 5, **caractérisé en ce que** le bras (3) est pivotable entre sa première position (7) et sa deuxième position (8).

7. Dispositif (1) selon la revendication 6, **caractérisé en ce que** l'axe autour duquel le bras (3) peut pivoter est horizontal et parallèle à la trajectoire de déplacement du chariot ou du coulisseau (2).

8. Dispositif (1) selon la revendication 6 ou 7, **caractérisé en ce que** le bras (3), dans sa deuxième position (8), est disposé sensiblement horizontalement, mais au moins selon un angle inférieur à 30°, notamment inférieur à 20°, par rapport à l'horizontale.

9. Dispositif (1) selon l'une quelconque des revendications 6 à 8, **caractérisé en ce que**, dans sa première position (7), le bras (3) est disposé sensiblement verticalement, mais au moins selon un angle supérieur à 60°, notamment supérieur à 70°, par rapport à l'horizontale.

10. Dispositif (1) selon l'une quelconque des revendications 6 à 9, **caractérisé en ce que** la pièce de recouvrement (9) est réalisée sous la forme d'un volet (13) pivotant sur le bras (3) autour d'un axe parallèle à l'axe de pivotement du bras, ledit axe étant disposé à une distance de l'élément enfichable (4) en direction de l'extrémité libre du bras (3).

11. Dispositif (1) selon la revendication 10, **caractérisé en ce que**, dans une position verticale du bras (3) dans sa première position (7), le volet (13) est également en position verticale de pivotement.

12. Dispositif (1) selon la revendication 10 ou 11, **caractérisé en ce que**, dans la deuxième position (8) du bras (3), le volet (13) est en position verticale de pivotement.

13. Dispositif (1) selon l'une quelconque des revendications 10 à 12, **caractérisé en ce que** le bras (3) et le volet (13) sont configurés de manière à ce que le volet (13) s'appuie sur une surface de base fixe (31) dans la deuxième position (8) du bras (3).

14. Dispositif (1) selon la revendication 3 et l'une quelconque des revendications 10 à 13, **caractérisé en ce que** la paroi (14) orientée à l'opposé du navire et les parois latérales (15, 16) du volet (13) adjacentes à la paroi (14) sont disposées sensiblement perpendiculairement au bras (3) dans la deuxième position (8) du bras (3).

15. Dispositif (1) selon l'une quelconque des revendications 10 à 14, **caractérisé en ce que** le volet (13) est couplé au bras (3) par un mécanisme à levier (17), de telle sorte qu'il est pivoté simultanément par le mouvement de pivotement du bras (3) entre sa première position (7) et sa deuxième position (8).

16. Dispositif (1) selon l'une quelconque des revendications 10 à 15, **caractérisé en ce que** le bras (3) est réalisé en forme de plaque et **en ce qu'**un canal de câbles (20) s'étendant le long du bras (3) est disposé sur le bras (3), canal dans lequel l'au moins une conduite d'alimentation en énergie (6) côté alimentation est disposée dans la zone du bras (3), le canal de câbles (20) étant réalisé de manière flexible dans la direction de pivotement au moins dans la zone de la liaison pivotante du bras (3) avec le chariot ou le coulisseau (2).

17. Dispositif (1) selon la revendication 1, **caractérisé en ce que**, dans la première position (7) du bras (3), la pièce de recouvrement (9) se termine avec le boîtier (21) sur le côté orienté à l'opposé du navire, sur les côtés orientés dans la direction de la trajectoire de déplacement du chariot ou du coulisseau (2) et sur le côté orienté à l'opposé du chariot ou du coulisseau (2) avec le boîtier (21).

18. Dispositif (1) selon l'une quelconque des revendications 1 à 17, **caractérisé en ce que** la ligne d'alimentation en énergie (6) côté fournisseur est posée dans une zone entre le fournisseur fixe et le chariot ou le coulisseau (2) dans au moins une chaîne de guidage d'énergie (23) qui présente un premier raccordement disposé de manière fixe par rapport au fournisseur et un deuxième raccordement (24) disposé sur le chariot ou le coulisseau (2), à partir duquel la ligne d'alimentation en énergie (6) est guidée vers le bras mobile (3) via au moins un canal de câbles (25).
